# EUROPÄISCHE PATENTSCHRIFT

(11) **EP 1 843 071 B1**
(45) Veröffentlichungstag und Bekanntmachung des Hinweises auf die Patenterteilung: **30.12.2009**
(21) Anmeldenummer: 06026243.3
(22) Anmeldetag: 19.12.2006
(51) Int. Cl.: F16L 5/08, H02G 3/22

(54) **Dichtpackung zum Einsetzen in eine Wandöffnung**
Seal for installation in a wall opening
Bourrage d'étanchéité pour l'utilisation dans un mur

(30) Priorität: 03.04.2006 DE 102006015847
(43) Veröffentlichungstag der Anmeldung: 10.10.2007
(73) Patentinhaber: Hauff-Technik GmbH & Co. KG, 89542 Herbrechtingen (DE)
(72) Erfinder: Kurz, Ralf, 89537 Giengen (DE)
(74) Vertreter: Szynka, Dirk

(56) Entgegenhaltungen:
- EP-A- 1 164 677
- DE-B3- 10 313 306
- DE-C- 581 247
- DE-C1- 3 828 693
- DE-U- 1 880 522
- DE-U1- 9 102 824
- DE-U1- 20 104 279
- FR-A1- 2 590 347
- FR-A1- 2 615 925

## Beschreibung

Die Erfindung betrifft eine Dichtpackung zum Einsetzen in eine Wandöffnung.

Solche Dichtpackungen werden bei sogenannten Hauseinführungskombinationen verwendet. Dies sind Einrichtungen, bei welchen Medien jeglicher Art von außen her in ein Gebäude eingeführt werden. Bei den Medien kann es sich um flüssige Medien wie Warmwasser eines Fernheizwerkes handeln, oder Kaltwasser, oder Gas. Es kann sich auch um elektrische Leitungen wie Telefonleitungen handeln. Als Gebäude kommen sowohl Privathäuser als auch industrielle Gebäude in Betracht. Nur beispielhaft wird auf folgende Druckschriften verwiesen:
DE-A-33 22 809
DE-A-39 17 447
EP-A-0 154 027
EP-A-0 308 697.

Der Zweck der eingangs genannten Dichtpakkung besteht darin, eine hermetische Abdichtung zwischen den beiden Seiten der Wand herzustellen, durch welche die Leitungen hindurchgeführt werden.

Die Dichtpackung umfasst einen Dichtkörper aus verformbarem Material. Er umfasst ferner zwei Klemmkörper, die beidseits des Dichtkörpers angeordnet sind und die dem Verformen des Dichtkörpers dienen. Der Dichtkörper wie auch die Klemmkörper haben Bohrungen. Durch jede Bohrung kann eine Leitung hindurchgeführt werden. Werden die beiden Klemmkörper gegenseitig verspannt, so verformt sich der Dichtkörper derart, dass er sich sowohl an die Mantelflächen der betreffenden Leitungen anlegt, als auch an die Laibung der Wand, in welcher die Dichtpackung montiert ist.

Unter dem Ausdruck "Leitung" sollen hierbei Rohrleitungen als auch Kabel oder sonstige Leitungen verstanden werden.

Die Leitungen haben von Fall zu Fall unterschiedliche Durchmesser. Demgemäß sind auch die Bohrungen im Dichtkörper und in den Klemmkörpern unterschiedlich weit zu bemessen. Es ist bekannt, Dichtkörper zu verwenden, die Pfropfen unterschiedlicher Durchmesser aufweisen, und die aus dem übrigen Dichtkörper ausgestoßen werden können, um eine Bohrung für eine Leitung zu schaffen. Dabei wählt man einen Pfropfen aus, dessen Durchmesser dem Durchmesser der betreffenden Leitung entspricht.

Es ist auch bekannt, Pfropfen vorzusehen, die nach Art einer Zwiebel aus Ringen aufgebaut sind. Dies erlaubt eine größere Flexibilität. Hiermit lässt sich die lichte Weite der zu schaffenden Öffnung dadurch erzielen, dass man eine bestimmte Anzahl von Ringen des Pfropfens verwendet. Siehe DE 201 04 279 U1.

Die genannte Lösung mit den Zwiebelringen hat Nachteile. So kann es beim Einsetzen eines aus Zwiebelringen aufgebauten Pfropfens zu Verwechslungen einzelner Zwiebelringe kommen.

Ferner wirken beim Verspannen der Dichtpakkung, das heißt beim Aufbringen von Spannkräften auf die Klemmkörper, Kräfte nicht nur auf den Dichtkörper, sondern auch auf die Leitung. Dabei kann es zu einer Verschiebung der Zwiebelringe, aber auch der Leitung in axialer Richtung kommen, vor allem dann, wenn (ungewollt) ein Zug auf die Leitung ausgeübt wird. Die Axialposition von Zwiebelringen und Leitung ist somit nicht gesichert.

Eine Dichtpackung nach dem Oberbegriff des
Anspruchs 1ergibt sich aus der DE 3828693 C1. Weiterhin wird verwiesen auf FR 2590347A1, FR2615925A1, DE581247C und DE 9102824U1.
Der Erfindung liegt die Aufgabe zugrunde, eine Dichtpackung nach dem Oberbegriff derart zu gestalten, dass
sie bei ökonomischen Vorteilen gute Gebrauchseigenschaften bietet.

Diese Aufgabe wird bei einer Dichtpackung gemäß Anspruch 1 gelöst.

Demgemäß hängen die Zwiebelringe eines Pfropfens zunächst aneinander, beispielsweise über Materialbrücken. Sie sind aber durch Abreißen voneinander trennbar. Die Brücke zwischen zwei einander benachbarten Zwiebelringen hat den Charakter einer Haut, die im allgemeinen wesentlich dünnersein wird, alsdie Dicke eines Zwiebelringes.

Bei der Montage können somit entsprechend dem betreffenden Leitungsdurchmesser eine bestimmte Anzahl von Zwiebelringen vom Pfropfen entfernt werden, am einfachsten durch Abreißen von Hand. Dabei beginnt man mit dem Abreißen oder Abtrennen natürlich von innen nach außen. Das heißt zunächst wird der innere Zwiebelring falls notwendig, entfernt, und dann der nach außen radial nachfolgende, und so weiter. Natürlich lässt sich auch eine Mehrzahl von Zwiebelringen gemeinsam abtrennen, wobei die abgetrennten Zwiebelringe hängen, aber auch die nachfolgenden, in Richtung von innen nach außen gesehen. Jedenfalls hängen die die Leitung umgebenden Zwiebelringe nach der Montage zusammen. Eine Axialverschiebung ist daher nicht möglich.

Die Dichtpackungen nach der Erfindung sind aufklappbar, und zwar insbesondere um eine zur Längsrichtung der einzulegenden Leiter parallele Schwenkachse. Auch sind Lösungen mit mehreren solcher Schwenkachsen bekannt geworden. Gerade bei solchen, geteilten Ausführungen, die für mehrere Leitungen vorgesehen sind, lässt sich die Erfindung besonders vorteilhaft anwenden. Es können nämlich keine losen Zwiebelringe oder Zwiebelringhälften verloren gehen. Dies bedeutet, dass selbst beim Aufklappen einer geteilten Dichtpackung die einzelnen Zwiebelringe fest in ihrer Position verbleiben.

Beim axialen Stauchen des Dichtkörpers einer Dichtpackung werden die Zwiebelringe ebenfalls in ihrer Position gehalten, desgleichen der Leiter, der von den Zwiebelringen umschlossen ist. Dies hat den großen Vorteil, dass die Dichtungswirkung der Zwiebelringe auf der gesamten Länge erhalten bleibt. Axiale Kräfte, die bei der Montage der Leitungen auftreten können oder die beispielsweise durch Wasserdruck auf den Dichtkörper einwirken, vermögen die Zwiebelringe nicht aus ihrerAxialposition zu verschieben.

Bei dem Material des Dichtkörpers kann es sich um jegliche Art von verformbarem Material handeln. Im allgemeinen wird dies gummielastisch sein.

Die Erfindung ist anhand der Zeichnung näher erläutert. Darin ist im einzelnen folgendes dargestellt:
- Figur 1: zeigt eine aufklappbare Dichtpackung zum Hindurchführen von drei Leitungen in Draufsicht.
- Figur 2: zeigt den Gegenstand von Figur 1 in einer Bildansicht A - A.
- Figur 3: zeigt den Dichtkörper der Dichtpackung gemäß der Figuren 1 und 2 in Draufsicht.
- Figur 4: zeigt eine zweite Ausführungsform einer Dichtpackung, die mit einer einzigen Leitung bestimmt ist, in Draufsicht.
- Figur 5: zeigt den Gegenstand von Figur 4 in einer Schnittansicht A - A.

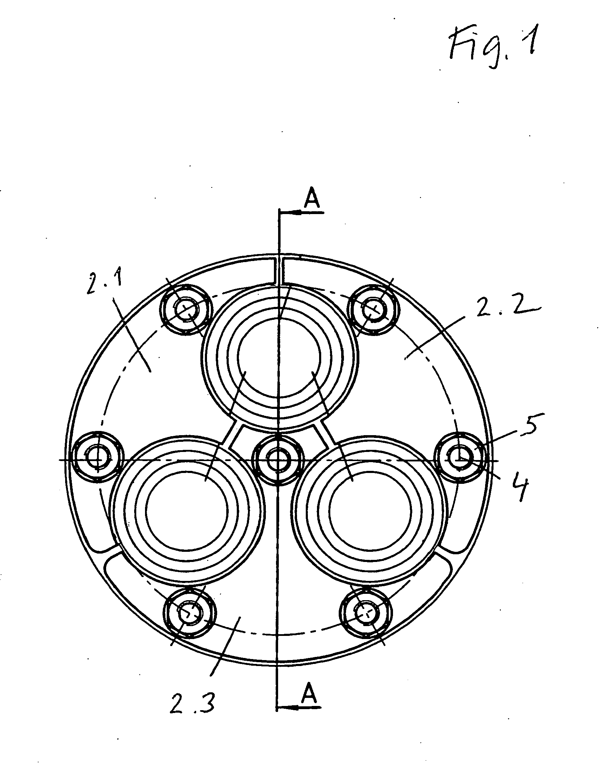

Die Dichtpackung gemäß Figur 1 weist einen Dichtkörper 1 auf. Dieser besteht aus gummielastischem Material. Dichtkörper 1 ist sandwichartig eingehüllt zwischen zwei Klemmkörpern 3 und 4. Dichtkörper 1 ist zwischen den beiden Klemmkörpern 2, 3 eingespannt. Hierzu dienen sieben Schrauben 4 mit zugehörenden Muttern 5.

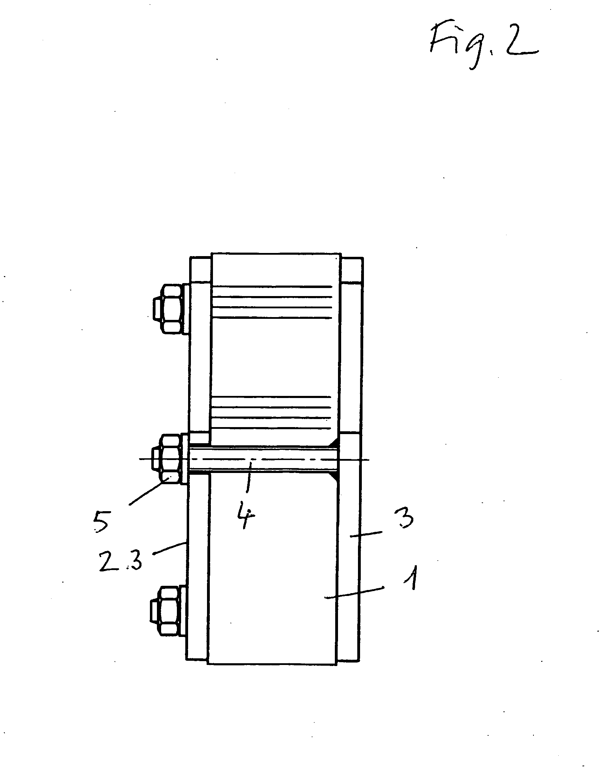

Wie man aus Figur2 erkennt, istjede Schraube 4 am Klemmkörper 2 fixiert - im vorliegenden Falle durch Anschweißen. Durch Anziehen der Muttern 5 wird auf den Dichtkörper 1 Spannung aufgebracht, so dass dieser gestaucht wird. Seine axiale Abmessung wird hierbei verringert, und seine radiale Abmessung vergrößert. Damit legt er sich mit seiner äußeren Umfangsfläche gegen die Laibung einer hier nicht gezeigten Wandöffnung. Er wird aber außerdem gegen die Umfangsfläche von Leitungen angepresst, die durch Öffnungen im Dichtkörper 1 hindurchzuführen sind.

In nicht verspanntem Zustand kann die Dichtpackung geöffnet werden. Zu diesem Zwecke sind die Klemmkörper 2, 3 geteilt - siehe die drei Teile 2.1, 2.2, 2.3. Außerdem ist der Dichtkörper 1 mit Fugen versehen. Siehe die Fugen 6.1, 6.2, 6.3.

Gemäß der Erfindung weist der Dichtkörper 1 drei Pfropfen 7.1, 7.2, 7.3 auf. Diese sind aus Ringen gebildet. Die Ringe hängen über Materialbrücken nach Art eines Filmscharniers aneinander.

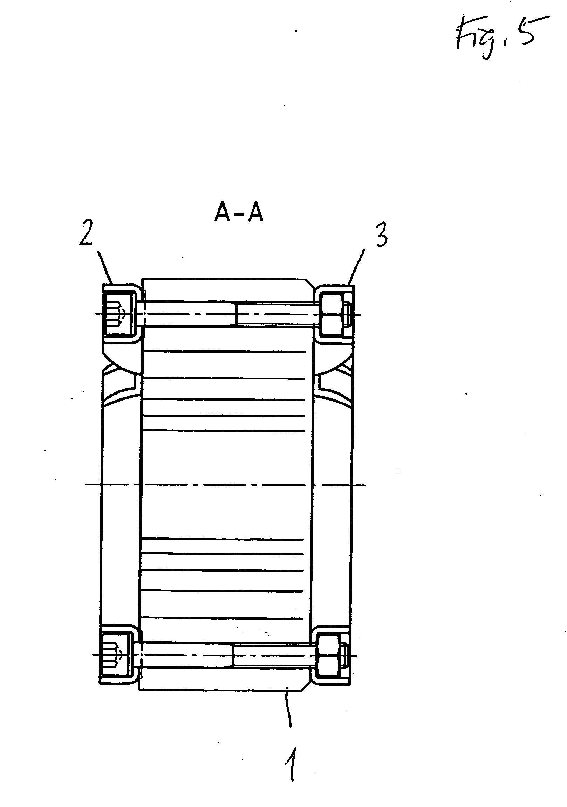

Die Materialbrücke zwischen zwei einanderbenachbarten Ringen kann an jeder beliebigen Stelle vorgesehen sein. Sie kann sich beispielsweise am äußeren Ende eines jeden Ringes über dessen Umfang hinweg erstrecken. Dies ist bei den beiden Ausführungsbeispielen der Fall. Man erkennt dies aus den Figuren 2 und 5. In beiden Figuren sieht man, dass die Zwiebelringe im Bereich des Klemmkörpers 3 nicht vollständig voneinander getrennt sind. Die Trennlinien erstrecken sich nämlich nicht bis zu den Klemmkörpern. Dies bedeutet, dass die Zwiebelringe hier durch eine dünne Haut aneinander hängen.

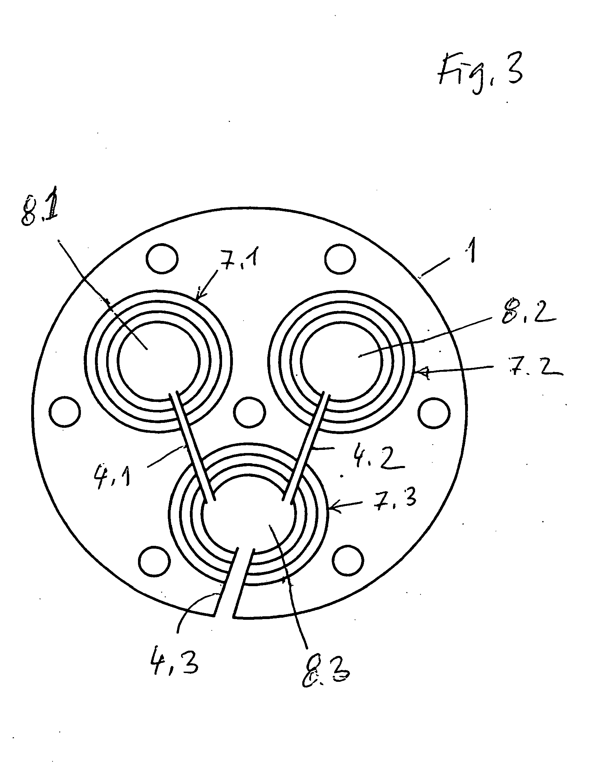

Ist der einzelne Zwiebelring geteilt, so wie aus Figur 3 ersichtlich, so bildet er einen Gummistreifen von quadratischer Gestalt. Die Materialbrücke kann dabei an den Enden zweier einander benachbarter Gummistreifen vorliegen.

Je nach Durchmesser der hindurch zuführenden Leitung wird eine entsprechende Zahl von Ringen entfernt. Bei der hier gezeigten Ausführungsform umschließt der jeweils innere Ring einen Hohlraum 8.1, 8.2, 8.3. Diese Ausführungsform wäre somit geeignet für eine Leitung, deren Durchmesser nicht kleiner ist, als die lichte Weite der hier erkennbaren Bohrung.

Alternativ könnte der Hohlraum auch ausgefüllt sein, das heißt ebenfalls aus demselben gummielastischen Material bestehen, wie der übrige Dichtkörper und wie die Ringe. Eine solche Ausführungsform kommt für Anwendungsfälle in Betracht, bei welchen eine Wand bereits mit einer Öffnung versehen ist, die aber temporär völlig abgeschlossen werden soll.

Die Verbindung zwischen einander benachbarten Ringen ist derart stark zu bemessen, dass ein Abtrennen zum Zwecke des Entfernens eines Ringes leicht möglich ist, dass aber ein genügend großer Zusammenhalt zwischen den einander benachbarten Ringen besteht, wenn auf einzelne Ringe oder auf die hindurch geführte Leitung ein axialer Zug aufgebracht wird.

Die Verbindung der einzelnen Ringe untereinander sowie die Verbindung zu dem Rest des Dichtkörpers 1 könnte auch auf andere Weise hergestellt sein, beispielsweise dadurch, dass ein gegenseitiges punktförmiges Anhaften hergestellt wird, zum Beispiel durch örtliches Aufbringen von Wärme.

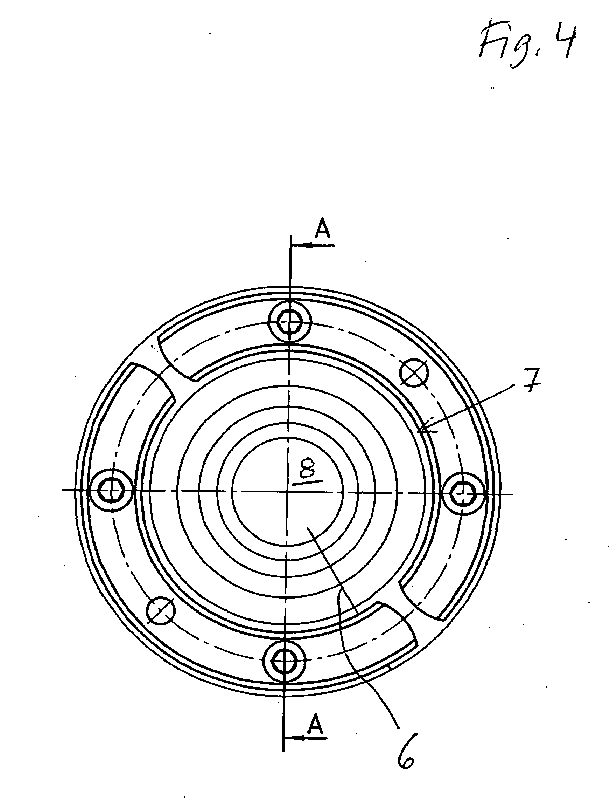

Die Ausführungsform gemäß der Figuren 4 und 5 ist grundsätzlich gleich gestaltet, wie jene gemäß den Figuren 1 bis 3.

Die Klemmkörper 2, 3 sind jedoch in diesem Falle im Querschnitt U-förmig - siehe Figur 5.

Es ist nur ein einziger Pfropfen 7 vorgesehen, mit einer einzigen Fuge 6 und mit einem einzigen Hohlraum 8.

### Bezugszeichenliste

- 1: Dichtkörper
- 2: Klemmkörper
- 2.1: Klemmkörperteile
- 2.2: Klemmkörperteile
- 2.3: Klemmkörperteile
- 3: Klemmkörper
- 4: Schrauben
- 5: Muttern
- 6.1: Fugen
- 6.2: Fugen
- 6.3: Fugen
- 7.1: Pfropfen
- 7.2: Pfropfen
- 7.3: Pfropfen
- 8.1: Hohlraum
- 8.2: Hohlraum
- 8.3: Hohlraum

## Patentansprüche

1. Dichtpackung zum Einsetzen in eine Wandöffnung;
mit einem Dichtkörper (1) aus verformbarem Material;
mit zwei Klemmkörpern (2, 3), die beidseits des Dichtkörpers (1) angeordnet sind, zwecks dessen Verformens;
wobei die Dichtpackung aufklappbar ist, indem die Klemmkörper passend zu Trennfugen im Dichtkörper geteilt sind;
und der Dichtkörper (1) einen Pfropfen zum Bilden eines Durchgangsloches umfasst, durch welches Leitungen hindurchführbar sind,
**dadurch gekennzeichnet, dass**
der Pfropfen (8.1, 8.2, 8.3) nach Art von Zwiebeln aus Ringen aufgebaut ist, deren Anzahl je nach dem Durchmesser der betreffenden Leitung ausgewählt wird;
und die Ringe über Materialbrücken aneinanderhängen und durch Abreißen voneinander trennbar sind;
und die Verbindung zwischen zwei einander benachbarten Ringen am axialen Ende der Ringe vorgesehen ist;
und der Hohlraum im Zentrum des Pfropfens mit demselben gummielastischen Material des übrigen Dichtkörpers und der Ringe ausgefüllt ist.

2. Dichtpackung nach Anspruch 1, **dadurch gekennzeichnet, dass** die Verbindung zwischen zwei einander benachbarten Ringen bei geöffneten Ringen an deren Umfangsende vorgesehen ist.

## Claims

1. Seal packing for inserting into a wall opening;
having a sealing body (1) of deformable material;
having two squeezing bodies (2, 3), which are provided on both sides of said sealing body (1), for the purpose of its deformation;
wherein said seal packing can be opened by folding, in that said squeezing bodies are parted in a manner matched to parting lines in said sealing body;
and said sealing body (1) comprises a plug for a formation of a through hole, through which ducts can be led through,
**characterized in that**
said plug (8.1, 8.2, 8.3) is constructed of rings in the manner of onions, wherein a number of rings is chosen according to a diameter of a respective duct;
and said rings stick to each other by means of material bridges and are separable from each other by tearing-off,
and the connection between two rings being adjacent to each other is provided at an axial end of said rings;
and a hollow space in the center of each plug is filled with the same rubber-elastic material of the other sealing body and said rings.

2. Seal packing according to claim 1, **characterized in that** said connection between two rings being adjacent to each other is provided at their circumferential end when said rings are opened.

## Revendications

1. Garniture d'étanchéité destinée à être insérée dans une ouverture de mur ;
avec un corps d'étanchéité (1) constitué d'un matériau déformable ;
avec deux corps de serrage (2, 3) disposés de part et d'autre du corps d'étanchéité (1), en vue de sa déformation ;
dans laquelle la garniture d'étanchéité peut être ouverte par rabattement, du fait que les corps de serrage sont divisés selon des joints de séparation dans le corps d'étanchéité ;
et le corps d'étanchéité (1) comprend un bouchon pour la formation d'un trou de passage, à travers lequel peuvent passer des conduites,
**caractérisée en ce que**
le bouchon (8.1, 8.2, 8.3) est construit à la manière d'un oignon, avec des anneaux, dont le nombre est sélectionné en fonction du diamètre de la conduite concernée ;
et **en ce que** les anneaux sont attachés les uns aux autres par des ponts de matériau, et peuvent être détachés les uns des autres par déchirement;
et **en ce que** la liaison entre deux anneaux voisins est prévue à l'extrémité axiale des anneaux ;
et **en ce que** l'espace creux au centre du bouchon est rempli du même matériau élastique comme du caoutchouc que le reste du corps d'étanchéité et des anneaux.

2. Garniture d'étanchéité selon la revendication 1, **caractérisée en ce que** la liaison entre deux anneaux voisins est prévue par leur extrémité de pourtour lorsque les anneaux sont ouverts.
